# FASCICULE DE BREVET EUROPEEN

(11) **EP 1 840 028 B1**
(45) Date de publication et mention de la délivrance du brevet: **13.05.2009**
(21) Numéro de dépôt: 07104455.6
(22) Date de dépôt: 20.03.2007
(51) Int. Cl.: B64D 15/04

(54) **Système de dégivrage d'un cone d'entrée de turbomoteur pour aéronef**
Enteisungssystem für die Nasenhaube eines Flugzeugsturbotriebwerks
De-icing system for the inlet cone of an aircraft turboengine

(30) Priorité: 22.03.2006 FR 0602492
(43) Date de publication de la demande: 03.10.2007
(73) Titulaire: SNECMA, 75015 Paris (FR)
(72) Inventeur: Earith, Thomas, Julien, Roland, 77250 Veneux les Sablons (FR); Picart, Jean-Yves, Daniel, 77190 Dammarie-les-Lys (FR)
(74) Mandataire: Poulin, Gérard

(56) Documents cités:
- FR-A- 1 090 733
- FR-A- 1 119 844
- FR-A- 2 621 554

## Description

### DOMAINE TECHNIQUE

La présente invention se rapporte de façon générale à un système de dégivrage d'un cône d'entrée de turbomoteur pour aéronef, tel qu'un turboréacteur ou un turbopropulseur.

L'invention concerne également un turbomoteur équipé d'un tel système de dégivrage de cône d'entrée, ainsi qu'un procédé de dégivrage d'un cône d'entrée de turbomoteur pour aéronef.

### ETAT DE LA TECHNIQUE ANTERIEURE

De l'art antérieur (FR 2621554), on connaît un système de dégivrage d'un cône d'entrée de turbomoteur, dont la conception repose globalement sur un prélèvement spécifique d'air au milieu ou en sortie du compresseur haute pression, où l'air y est suffisamment chaud pour pouvoir remplir ultérieurement la fonction de dégivrage du cône. A cet égard, il est noté que ce prélèvement ne peut habituellement pas être effectué en sortie du compresseur basse pression en raison du faible niveau énergétique de l'air se situant dans cette partie du turbomoteur.

Le système de dégivrage peut être amené à intégrer des éléments spécifiques à ce prélèvement, tels que des conduits, un ou plusieurs systèmes d'étanchéité, ou encore des vannes de régulation du débit d'air de dégivrage.

Naturellement, ces éléments spécifiquement rapportés pour assurer le dégivrage du cône d'entrée sont extrêmement pénalisants en termes de coûts de production et de masse associée.

Par ailleurs, il est précisé que le prélèvement d'air spécifique effectué au milieu ou en sortie du compresseur haute pression nuit sensiblement aux performances globales du turbomoteur.

### EXPOSÉ DE L'INVENTION

L'invention a donc pour but de proposer un système de dégivrage d'un cône d'entrée de turbomoteur pour aéronef, remédiant aux problèmes mentionnés ci-dessus relatifs aux réalisations de l'art antérieur.

Pour ce faire, l'invention a pour objet un système de dégivrage d'un cône d'entrée de turbomoteur pour aéronef comprenant des moyens de diffusion d'air destinés à équiper le cône d'entrée du turbomoteur afin de lui délivrer de l'air chaud. Selon l'invention, il comporte également un circuit d'évacuation de l'air de pressurisation d'au moins une enceinte-palier du turbomoteur, ce circuit communiquant avec les moyens de diffusion d'air pour pouvoir alimenter ces derniers en air chaud.

Par ailleurs, l'invention a également pour objet un turbomoteur pour aéronef comportant un système de dégivrage tel que celui présenté ci-dessus.

De plus, un autre objet de l'invention concerne un procédé de dégivrage d'un cône d'entrée de turbomoteur pour aéronef. Dans ce procédé, pour alimenter en air chaud des moyens de diffusion d'air équipant le cône d'entrée du turbomoteur, on emploie de l'air chaud provenant d'un circuit d'évacuation de l'air de pressurisation d'au moins une enceinte-palier du turbomoteur.

Ainsi, la particularité de la présente invention réside dans le recyclage de l'air de pressurisation des enceintes-paliers du turbomoteur, puisque cet air chaud déshuilé sortant des enceintes-paliers est à présent employé pour assurer le dégivrage du cône d'entrée de ce turbomoteur. Par conséquent, on valorise les calories provenant de la dissipation de chaleur au niveau des roulements situés dans les enceintes-paliers, étant donné que ces calories sont directement apportées à l'air qui peut alors atteindre un niveau énergétique largement suffisant pour permettre le dégivrage du cône d'entrée. Cette valorisation des calories contraste ainsi avec le manque d'optimisation rencontré dans les réalisations de l'art antérieur, dans lesquelles l'air déshuilé sortant des enceintes-paliers était directement évacué vers l'aval par le système d'arbres moteurs du turbomoteur.

De plus, il est à présent possible de simplifier sensiblement la conception du turbomoteur, dans la mesure où il n'est naturellement plus nécessaire de conserver le circuit de prélèvement d'air spécifique rencontré dans l'art antérieur et décrit ci-dessus. En effet, le prélèvement d'air destiné à assurer le dégivrage du cône d'entrée est à présent le même que celui dédié à la pressurisation des enceintes-paliers, ce qui permet de supprimer des éléments du type conduits, systèmes d'étanchéité, ou encore vannes de régulation. Cette particularité permet avantageusement d'obtenir des gains en termes de coûts de production et de masse globale du turbomoteur.

D'autre part, il résulte également du recyclage de l'air de pressurisation des enceintes-paliers, un gain en consommation de carburant et donc en performances globales pour le turbomoteur, car il n'est plus nécessaire de prélever un débit d'air supérieur à celui juste requis pour la pressurisation des enceintes-paliers. A ce titre, il est noté que le recyclage opéré dans la présente invention est d'autant plus avantageux que le prélèvement d'air commun peut s'effectuer en sortie du compresseur basse pression, et donc non nécessairement au milieu ou en sortie du compresseur haute pression où les prélèvements d'air y sont bien plus pénalisants.

La conception adoptée permet un dégivrage permanent du cône d'entrée, même hors conditions givrantes, sans que cela ne se traduise par une baisse de rendement du turbomoteur. L'air recyclé n'a par conséquent plus besoin de transiter par une vanne de régulation spécifique avant d'entrer dans les moyens de diffusion d'air destinés à équiper le cône d'entrée, de sorte que la fiabilité du dégivrage est avantageusement accrue.

De préférence, le circuit d'évacuation de l'air de pressurisation d'au moins une enceinte-palier du turbomoteur comporte un conduit d'air principal au moins partiellement situé au sein d'un système d'arbres moteurs du turbomoteur, ce conduit d'air principal étant orienté parallèlement à un axe longitudinal de ce turbomoteur, et préférentiellement centré sur cet axe longitudinal. On peut prévoir que ce conduit d'air principal soit au moins partiellement constitué par un conduit habituellement rapporté au sein du système d'arbres moteurs, ce conduit étant dénommé « center vent » ou encore conduit de dégazage des enceintes-paliers. Néanmoins, ce conduit peut également être constitué en partie ou en totalité par une portion creuse du système d'arbres moteurs, et plus particulièrement par la portion creuse de l'arbre basse pression le plus intérieur, qui sert généralement au logement du « center vent » précité.

De préférence, le conduit d'air principal dispose d'une extrémité amont communiquant avec les moyens de diffusion d'air destinés à équiper le cône d'entrée du turbomoteur, ainsi que d'une extrémité aval obturée, se situant préférentiellement à proximité d'une extrémité aval de l'arbre moteur basse pression du système d'arbres moteurs.

Toujours de manière préférentielle, afin d'autoriser un écoulement d'air chaud satisfaisant vers l'amont au sein du conduit d'air principal, ce dernier dispose d'une section transversale sensiblement circulaire et homogène sur sa longueur.

De préférence, le circuit d'évacuation de l'air de pressurisation d'au moins une enceinte-palier du turbomoteur communique avec une enceinte-palier avant et une enceinte-palier arrière du turbomoteur. Naturellement, il serait possible de prévoir que le circuit d'évacuation de l'air de pressurisation d'au moins une enceinte-palier ne communique qu'avec l'une des deux enceintes-paliers précitées, sans sortir du cadre de l'invention.

Le circuit d'évacuation de l'air de pressurisation comporte préférentiellement au moins un système déshuileur équipant chacune des enceintes-paliers avant et arrière, chaque système déshuileur communiquant avec le conduit d'air principal du circuit d'évacuation.

Enfin, a titre d'exemple illustratif, les moyens de diffusion d'air comprennent un conduit d'amenée d'air dont une extrémité aval est raccordée au circuit d'évacuation de l'air de pressurisation, et dont une extrémité amont se situe au niveau d'un sommet d'un cône secondaire destiné à délimiter, conjointement avec le cône d'entrée du turbomoteur, un espace de dégivrage prévu pour être traversé par l'air chaud. Cependant, il est précisé que tout type de moyens de diffusion d'air connus de l'homme du métier et capables d'équiper le cône d'entrée peuvent être employés pour la mise en oeuvre de la présente invention.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en coupe longitudinale d'une partie avant d'un turbomoteur équipé d'un système de dégivrage d'un cône d'entrée selon un mode de réalisation préféré de la présente invention ;
- la figure 2 représente une vue détaillée d'une partie de celle montrée sur la figure 1 ; et
- la figure 3 représente une vue partielle détaillée en coupe longitudinale d'une partie arrière du turbomoteur montré sur la figure 1.

### EXPOSÉ DÉTAILLÉ DE MODES DE RÉALISATION PRÉFÉRÉS

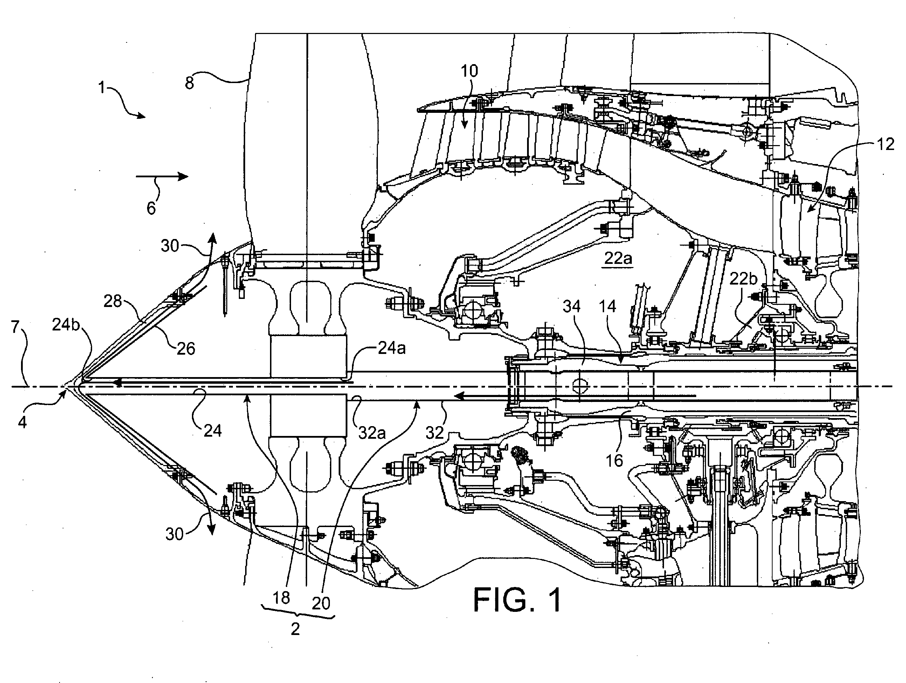

En référence tout d'abord à la figure 1, on peut apercevoir une partie avant d'un turbomoteur 1 pour aéronef, équipé d'un système de dégivrage 2 d'un cône d'entrée, selon un mode de réalisation préféré de la présente invention. A cet égard, il est noté que le turbomoteur 1, du type turboréacteur, est lui-même objet de la présente invention.

Globalement, la partie avant de ce turbomoteur 1 comprend d'amont en aval selon une direction générale d'écoulement de l'air à travers le turbomoteur, schématisée par la flèche 6 et parallèle à un axe longitudinal 7 de ce turbomoteur, le cône d'entrée 4, une soufflante 8, un compresseur basse pression 10, et un compresseur haute pression 12.

Par ailleurs, toujours de façon connue de l'homme du métier, le turbomoteur comprend un système d'arbres moteurs 14 comportant une pluralité d'arbres concentriques centrés sur l'axe 7, et dont la fonction première est d'autoriser la rotation des éléments tournants du turbomoteur. A ce titre, le système d'arbres moteurs 14 comprend habituellement un arbre moteur basse pression 16 reliant le compresseur basse pression 10 et la turbine basse pression (non visible sur la figure 1) du turbomoteur. Cet arbre moteur basse pression 16 s'étend sensiblement d'un bout à l'autre du turbomoteur, et constitue généralement l'arbre le plus intérieur du système d'arbres 14. De plus, il est généralement creux, ce qui permet, selon une particularité de la présente invention, de loger en son sein une partie du système de dégivrage 2 comme cela sera décrit ci-après.

En effet, le système de dégivrage 2 du cône 4 comporte globalement des moyens de diffusion d'air 18 destinés à équiper le cône d'entrée 4 afin de lui délivrer de l'air chaud, ainsi qu'un circuit 20 d'évacuation de l'air de pressurisation d'au moins une enceinte-palier du turbomoteur, ce circuit 20 étant situé en aval des moyens 18 avec lesquels il communique, comme cela est clairement visible sur la figure 1.

Dans l'exemple montré sur cette même figure, les moyens de diffusion d'air 18 comprennent un conduit d'amenée d'air 24 centré sur l'axe 7 et dont une extrémité aval 24a est raccordée au circuit d'évacuation de l'air de pressurisation 20, et dont une extrémité amont 24b se situe au niveau d'un sommet d'un cône secondaire 26 situé en aval et intérieurement par rapport au cône 4. Le cône secondaire 26 est destiné à délimiter, conjointement avec le cône 4, un espace de dégivrage 28 prévu pour être traversé par l'air chaud. Ainsi, l'air chaud issu du conduit 24 par l'extrémité amont 24b se déplace vers l'aval et radialement vers l'extérieur en empruntant l'espace sensiblement conique de dégivrage 28 prévu à cet effet, avant d'être évacué du turbomoteur par des orifices placés à proximité d'une extrémité aval du cône 4, comme le montrent schématiquement les flèches 30 sur la figure 1.

Le circuit 20 d'évacuation de l'air de pressurisation d'au moins une enceinte-palier du turbomoteur comporte quant à lui un conduit d'air principal 32 situé au sein du système d'arbres moteurs 14. Ce conduit d'air principal 32 est centré sur l'axe longitudinal 7, et dispose d'une extrémité amont 32a raccordée sur l'extrémité aval 24a du conduit 24 appartenant aux moyens de diffusion d'air 18.

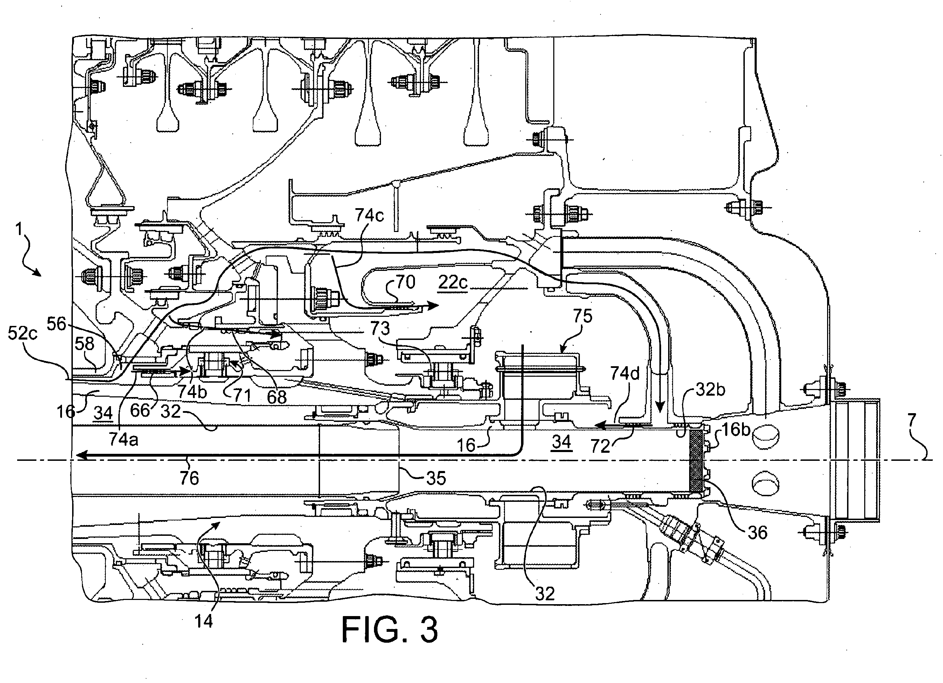

Le conduit d'air principal 32, de préférence de section transversale sensiblement circulaire et homogène sur toute sa longueur, s'étend préférentiellement jusqu'à une extrémité aval (non visible sur la figure 1) de l'arbre basse pression 16. De plus, on prévoit qu'il est en grande partie constitué par un conduit dénommé « center vent » rapporté fixement au sein du creux longitudinal 34 formé dans l'arbre basse pression 16, et dont l'homogénéité de la section transversale circulaire permet un écoulement non perturbé de l'air empruntant ce conduit dans la direction amont. Comme cela est le mieux visible sur la figure 3, il est noté que seule une faible portion arrière du conduit d'air principal 32 est constitué par la partie du creux 34 de l'arbre 16 située dans le prolongement arrière du conduit « center vent », ce dernier disposant effectivement d'une extrémité aval 35 située en amont d'un bouchon 36 obturant l'extrémité aval 32b du conduit 32. Par ailleurs, il est noté que le bouchon 36 est agencé au niveau de l'extrémité aval 16b l'arbre basse pression 16, de sorte qu'il est alors ici possible de considérer que les deux extrémités 16b, 32b sont très rapprochées l'une de l'autre, voire sensiblement confondues.

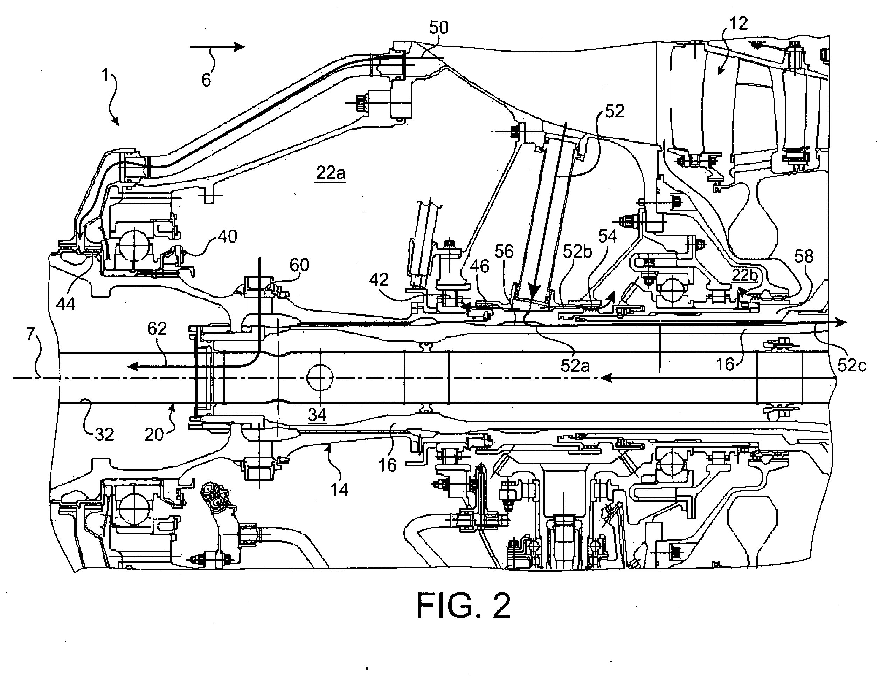

En référence à présent à la figure 2 détaillant la partie avant du turbomoteur 1, on peut voir deux enceintes-paliers avant 22a, 22b du turbomoteur, centrées sur l'axe 7 et décalées l'une de l'autre selon la direction 6. De façon connue de l'homme du métier, chaque enceinte-palier d'un turbomoteur renferme au moins un système de roulement d'arbre, et est fermée par une pluralité de systèmes d'étanchéité air/huile du type labyrinthe ou similaire.

Ainsi, l'enceinte-palier avant 22a la plus amont intègre deux systèmes de roulement d'arbre 40, 42, situés respectivement à proximité d'un système d'étanchéité amont 44 et d'un système d'étanchéité aval 46 fermant cette enceinte. Au niveau de chacun de ces deux derniers systèmes 44, 46, il est prévu de forcer un débit d'air à entrer à l'intérieur de l'enceinte 22a, de manière à éviter que l'huile présente au sein de cette enceinte 22a ne s'échappe par ces mêmes systèmes d'étanchéité air/huile 44, 46. A titre indicatif, l'air amené au niveau de ces systèmes 44, 46 est habituellement appelé air de pressurisation de l'enceinte-palier avant 22a, et est acheminé jusqu'aux systèmes d'étanchéité par des conduits classiques connus de l'homme du métier.

Pour amener de l'air de pressurisation de l'enceinte au niveau du système d'étanchéité amont 44 de l'enceinte-palier 22a, il est réalisé un premier prélèvement d'air schématisé par la flèche 50, ce prélèvement étant préférentiellement effectué au niveau d'une sortie du compresseur basse pression 10. Par ailleurs, pour amener de l'air de pressurisation de l'enceinte au niveau du système d'étanchéité aval 46 de l'enceinte-palier 22a, il est réalisé un second prélèvement d'air schématisé par la flèche 52, une partie 52a de ce prélèvement étant dirigé vers le labyrinthe 46, comme cela est clairement visible sur la figure 2. Ici encore, le prélèvement 52 est préférentiellement effectué au niveau d'une sortie du compresseur basse pression 10.

A cet égard, il est noté qu'une autre partie 52b du second prélèvement 52 est dirigée vers un labyrinthe amont 54 de l'enceinte-palier avant 22b la plus aval, qui ne sera ici pas davantage décrite.

Enfin, encore une autre partie 52c du second prélèvement 52 est dirigée vers l'enceinte-palier arrière 22c montrée sur la figure 3. Pour ce faire, cette partie 52c du second prélèvement 52 est dirigée vers l'aval dans un espace annulaire 56 situé entre l'arbre basse pression 16 et l'arbre haute pression 58 qui l'entoure.

Toujours en référence à la figure 2, on peut apercevoir que le circuit d'évacuation d'air de pressurisation 20, faisant partie intégrante du système de dégivrage 2, comporte un système déshuileur 60 équipant une partie radiale interne de l'enceinte annulaire 22a. Le mélange air/huile situé à l'intérieur de cette enceinte 22a et réchauffé par la chaleur dégagée par les roulements 40, 42 s'évacue donc radialement vers l'intérieur par le système déshuileur 60, dont le but est de filtrer l'huile du mélange afin d'aboutir à un flux d'air chaud recyclé 62 capable d'alimenter les moyens de diffusion d'air 18 équipant le cône d'entrée 4. En effet, le flux d'air chaud recyclé 62, obtenu en sortie du système déshuileur 60 et issu des prélèvements d'air 50, 52, se dirige à travers le conduit 32 vers la seule extrémité ouverte 32a de ce dernier, pour rejoindre les moyens de diffusion d'air 18 équipant le cône d'entrée 4.

En référence à présent à la figure 3 montrant une partie arrière du turbomoteur 1, on peut voir que l'enceinte-palier arrière 22c intègre deux systèmes de roulement d'arbre 71, 73, et que cette enceinte 22c est fermée par une pluralité de systèmes d'étanchéité amont 66, 68, 70, et par système d'étanchéité aval 72. Ici encore, au niveau de chacun de ces systèmes d'étanchéité air/huile, il est prévu de forcer un débit d'air à entrer à l'intérieur de l'enceinte 22c, de manière à éviter que l'huile présente au sein de cette enceinte 22c ne s'échappe par ces mêmes systèmes d'étanchéité.

Pour amener de l'air de pressurisation de l'enceinte au niveau de chacun des systèmes d'étanchéité 66, 68, 70, 72 de l'enceinte-palier 22c, il est utilisé la partie 52c du second prélèvement d'air 52 transitant vers l'aval par l'espace annulaire 56 situé entre les arbres 16 et 58. Ainsi, la partie 52c du prélèvement 52 se divise en quatre flux d'air de pressurisation 74a, 74b, 74c, 74d pénétrant chacun dans l'enceinte 22c, respectivement par les systèmes d'étanchéité air/huile 66, 68, 70, 72.

Toujours en référence à la figure 3, on peut apercevoir que le circuit d'évacuation d'air de pressurisation 20 comporte également un système déshuileur 75 équipant une partie radiale interne de l'enceinte annulaire 22c. Le mélange air/huile situé à l'intérieur de cette enceinte 22c et réchauffé par la chaleur dégagée par les roulements 71, 73 s'évacue donc radialement vers l'intérieur par le système déshuileur 75, dont le but est de filtrer l'huile du mélange afin d'aboutir à un flux d'air chaud recyclé 76 capable de rejoindre le flux recyclé 62, pour alimenter les moyens de diffusion d'air 18 équipant le cône d'entrée 4.

En effet, le flux d'air chaud recyclé 76, obtenu en sortie du système déshuileur 75 et issu du prélèvement d'air 52, se dirige à travers le conduit 32 vers la seule extrémité ouverte 32a de ce dernier, pour rejoindre les moyens de diffusion d'air 18 équipant le cône d'entrée 4. A titre indicatif, il est noté que ce flux d'air chaud recyclé 76 débouche dans le conduit 32 dans la partie arrière de celui-ci qui est définie par le creux 34 de l'arbre basse pression 16, de sorte qu'il ne rejoint le conduit « center vent » qu'après avoir parcouru une certaine distance vers l'amont dans le conduit d'air principal 32.

Bien entendu, diverses modifications peuvent être apportées par l'homme du métier au turbomoteur 1 qui vient d'être décrit, uniquement à titre d'exemple non limitatif.

## Revendications

1. Système de dégivrage (2) d'un cône d'entrée (2) de turbomoteur pour aéronef comprenant des moyens de diffusion d'air (18) destinés à équiper le cône d'entrée du turbomoteur afin de lui délivrer de l'air chaud, **caractérisé en ce qu'**il comporte également un circuit (20) d'évacuation de l'air de pressurisation d'au moins une enceinte-palier du turbomoteur, ledit circuit (20) communiquant avec lesdits moyens de diffusion d'air (18) pour pouvoir alimenter ces derniers en air chaud.

2. Système de dégivrage (2) selon la revendication 1, **caractérisé en ce que** ledit circuit (20) d'évacuation de l'air de pressurisation d'au moins une enceinte-palier du turbomoteur comporte un conduit d'air principal (32) au moins partiellement situé au sein d'un système d'arbres moteurs (14) du turbomoteur, ledit conduit d'air principal (32) étant orienté parallèlement à un axe longitudinal (7) de ce turbomoteur.

3. Système de dégivrage (2) selon la revendication 2, **caractérisé en ce que** ledit conduit d'air principal (32) est centré sur l'axe longitudinal (7) du turbomoteur.

4. Système de dégivrage (2) selon la revendication 2 ou la revendication 3, **caractérisé en ce que** ledit conduit d'air principal (32) dispose d'une extrémité amont (32a) communiquant avec lesdits moyens de diffusion d'air (18) destinés à équiper le cône d'entrée du turbomoteur, ainsi que d'une extrémité aval (32b) obturée.

5. Système de dégivrage (2) selon l'une quelconque des revendications 2 à 4, **caractérisé en ce que** ledit conduit d'air principal (32) dispose d'une section transversale sensiblement circulaire et homogène sur sa longueur.

6. Système de dégivrage (2) selon l'une quelconque des revendications 2 à 5, **caractérisé en ce que** ledit circuit (20) d'évacuation de l'air de pressurisation d'au moins une enceinte-palier du turbomoteur communique avec une enceinte-palier avant (22a) et une enceinte-palier arrière (22c) du turbomoteur.

7. Système de dégivrage (2) selon la revendication 6, **caractérisé en ce que** ledit circuit (20) d'évacuation de l'air de pressurisation comporte au moins un système déshuileur (60, 75) équipant chacune desdites enceintes-paliers avant et arrière (22a, 22c), chaque système déshuileur (60, 75) communiquant avec ledit conduit d'air principal (32) du circuit d'évacuation.

8. Système de dégivrage (2) selon l'une quelconque des revendications précédentes, **caractérisé en ce que** lesdits moyens de diffusion d'air (18) comprennent un conduit d'amenée d'air (24) dont une extrémité aval (24a) est raccordée au circuit (20) d'évacuation de l'air de pressurisation, et dont une extrémité amont (24b) se situe au niveau d'un sommet d'un cône secondaire (26) destiné à délimiter, conjointement avec ledit cône d'entrée (4) du turbomoteur, un espace de dégivrage (28) prévu pour être traversé par l'air chaud.

9. Turbomoteur (1) pour aéronef **caractérisé en ce qu'**il comporte un système de dégivrage (2) selon l'une quelconque des revendications précédentes.

10. Procédé de dégivrage d'un cône d'entrée de turbomoteur pour aéronef, **caractérisé en ce que** pour alimenter en air chaud des moyens de diffusion d'air équipant le cône d'entrée du turbomoteur, on emploie de l'air chaud provenant d'un circuit d'évacuation de l'air de pressurisation d'au moins une enceinte-palier du turbomoteur.

## Claims

1. A system for deicing an aircraft turbine engine inlet cone comprising air-diffusing means intended to equip the inlet cone of the turbine engine so as to deliver hot air thereto, which system also comprises a circuit for removing pressurizing air from at least one bearing enclosure of the turbine engine, said circuit communicating with said air-diffusing means in order to be able to supply the latter with hot air.

2. The deicing system as claimed in claim 1, wherein said circuit for removing pressurizing air from at least one bearing enclosure of the turbine engine comprises a main air duct at least partially situated within a system of driveshafts of the turbine engine, said main air duct being directed parallel to a longitudinal axis of this turbine engine.

3. The deicing system as claimed in claim 2, wherein said main air duct is centered on the longitudinal axis of the turbine engine.

4. The deicing system as claimed in claim 2 or claim 3, wherein said main air duct has an upstream end communicating with said air-diffusing means which are intended to equip the turbine engine inlet cone, and a downstream end that is blocked off.

5. The deicing system as claimed in any one of claims 2 to 4, wherein said main air duct has a cross section that is more or less circular and uniform along its length.

6. The deicing system as claimed in any one of claims 2 to 5, wherein said circuit for removing pressurizing air from at least one bearing enclosure of the turbine engine communicates with a front bearing enclosure and a rear bearing enclosure of the turbine engine.

7. The deicing system as claimed in claim 6, wherein said circuit for removing pressurizing air comprises at least one oil-removal system equipping each of said front and rear bearing enclosures, each oil-removal system communicating with said main air duct of the removal circuit.

8. The deicing system as claimed in any one of the preceding claims, wherein said air-diffusing means comprise an air-carrying duct, a downstream end of which is connected to the circuit for removing pressurizing air and an upstream end of which lies in the region of a vertex of a secondary cone intended, together with said turbine engine inlet cone, to delimit a deicing space through which the hot air is intended to pass.

9. An aircraft turbine engine which also comprises a deicing system as claimed in any one of the preceding claims.

10. A method of deicing an aircraft turbine engine inlet cone, wherein, in order to supply hot air to the air-diffusing means with which the turbine engine inlet cone is equipped, use is made of hot air from a circuit for removing pressurizing air from at least one bearing enclosure of the turbine engine.

## Patentansprüche

1. Enteisungssystem (2) für den Eintrittskonus eines Turbotriebwerks eines Luftfahrzeugs mit Mitteln zur Diffusion von Luft (18), die dazu vorgesehen sind, dass mit ihnen der Eintrittskonus des Turbotriebwerks ausgerüstet wird, um ihm warme Luft zuzuführen,
**dadurch gekennzeichnet,**
**dass** es ferner einen Auslasskreis (20) für die Luft der Druckbelüftung von mindestens einem Lager-Zwischenraum des Turbotriebwerks aufweist, wobei dieser Kreis (20) mit den Mitteln zur Diffusion von Luft (18) kommuniziert, um letztere mit warmer Luft zu versorgen.

2. Enteisungssystem (2) nach Anspruch 1,
**dadurch gekennzeichnet,**
**dass** dieser Auslasskreis (20) für die Luft der Druckbelüftung von mindestens einem Lager-Zwischenraum des Turbotriebwerks eine Hauptluftleitung (32) umfasst, die sich zumindest teilweise im Bereich eines Antriebswellensystems (14) des Turbotriebwerks befindet, wobei diese Hauptluftleitung (32) parallel zu einer Längsachse (7) dieses Turbotriebwerks ausgerichtet ist.

3. Enteisungssystem (2) nach Anspruch 2,
**dadurch gekennzeichnet,**
**dass** diese Hauptluftleitung (32) auf der Längsachse (7) des Turbotriebwerks zentriert ist.

4. Enteisungssystem (2) nach Anspruch 2 oder Anspruch 3,
**dadurch gekennzeichnet**,
das diese Hauptluftleitung (32) über ein vorderes Ende (32a) verfügt, das mit den Mitteln zur Diffusion von Luft (18) kommuniziert, die dazu vorgesehen sind, dass mit ihnen der Eintrittskonus des Turbotriebwerks ausgerüstet wird, sowie über ein hinteres, verschlossenes Ende (32b) verfügt.

5. Enteisungssystem (2) nach einem der Ansprüche 2 bis 4,
**dadurch gekennzeichnet,**
**dass** diese Hauptluftleitung (32) einen im Wesentlichen kreisförmigen und über seine Länge gleichförmigen Querschnitt hat.

6. Enteisungssystem (2) nach einem der Ansprüche 2 bis 5,
**dadurch gekennzeichnet,**
**dass** der Auslasskreis (20) für die Luft der Druckbelüftung von mindestens einem Lager-Zwischenraum des Turbotriebwerks mit einem vorderen Lager-Zwischenraum (22a) und einem hinteren Lager-Zwischenraum (22c) des Turbotriebwerks kommuniziert.

7. Enteisungssystem (2) nach Anspruch 6,
**dadurch gekennzeichnet,**
**dass** der Auslasskreis (20) für die Luft der Druckbelüftung mindestens ein Entölersystem (60, 75) enthält, mit dem die vorderen und hinteren Lager-Zwischenräume (22a, 22c) jeweils ausgerüstet sind, wobei jedes Entölersystem (60, 75) mit der Hauptluftleitung (32) des Auslasskreises kommuniziert.

8. Enteisungssystem (2) nach einem der vorherigen Ansprüche,
**dadurch gekennzeichnet,**
**dass** die Mittel zur Diffusion von Luft (18) eine Luftzuführleitung (24) umfassen, deren hinteres Ende (24a) an den Auslasskreis (20) für die Luft der Druckbelüftung angeschlossen ist und deren vorderes Ende (24b) sich im Bereich einer Spitze eines Zweitkonus (26) befindet, der dazu bestimmt ist, zusammen mit dem genannten Eintrittskonus (4) des Turbotriebwerks einen Enteisungs-Zwischenraum (28) zu umgrenzen, der für den Durchzug der warmen Luft vorgesehen ist.

9. Turbotriebwerk (1) für Luftfahrzeuge,
**dadurch gekennzeichnet,**
**dass** es ein Enteisungssystem (2) nach einem der vorherigen Ansprüche aufweist.

10. Verfahren zum Enteisen eines Eintrittskonus eines Turbotriebwerks von Luftfahrzeugen,
**dadurch gekennzeichnet,**
**dass** für die Warmluft-Versorgung der Mittel zur Diffusion von Luft, mit denen der Eintrittskonus des Turbotriebwerks ausgerüstet ist, Warmluft verwendet wird, die aus einem Auslasskreis für die Luft der Druckbelüftung von mindestens einem Lager-Zwischenraum des Turbotriebwerks stammt.
